# EUROPÄISCHE PATENTSCHRIFT

(11) **EP 3 381 594 B1**
(45) Veröffentlichungstag und Bekanntmachung des Hinweises auf die Patenterteilung: **15.02.2023**
(21) Anmeldenummer: 18162437.0
(22) Anmeldetag: 17.03.2018
(51) Int. Cl.: B23B 25/06, G05B 19/4093

(54) **DREHMASCHINE MIT EINER RFID ARBEITSRAUMÜBERWACHUNG MIT ELEKTROMAGNETISCHER KOPPLUNG ZWISCHEN TRANSPONDER UND SENDE-/EMPFANGSEINHEIT, SOWIE EIN VERFAHREN ZU DEREN BETRIEB**
LATHE WITH AN RFID WORKSPACE MONITORING SYSTEM WITH ELECTROMAGNETIC COUPLING BETWEEN TRANSPONDER AND TRANSMITTER/RECEIVER UNIT, AS WELL AS METHOD OF OPERATING THE SAME
TOUR AVEC UN SYSTÈME DE SURVEILLANCE DE L'ESPACE DE TRAVAIL RFID AVEC UN COUPLAGE ÉLECTROMAGNÉTIQUE ENTRE LE TRANSPONDEUR ET L'ÉMETTEUR/RÉCEPTEUR, ET UN PROCÉDÉ POUR SON FONCTIONNEMENT

(30) Priorität: 20.03.2017 DE 102017105953
(43) Veröffentlichungstag der Anmeldung: 03.10.2018
(73) Patentinhaber: WEILER Werkzeugmaschinen GmbH, 91448 Emskirchen (DE)
(72) Erfinder: Eckardt, Markus, 91617 Oberdachstetten (DE); Wäger, Markus, 91452 Wilhermsdorf (DE)
(74) Vertreter: Mielke, Klaus

(56) Entgegenhaltungen:
- EP-A1- 3 031 573
- EP-A2- 2 664 973
- WO-A1-2014/155204
- WO-A1-2015/036519
- WO-A2-2011/144997
- CN-A- 104 889 824
- DE-A1-102005 003 820
- DE-U1-212010 000 101
- JP-A- 2016 135 533
- Itu: "Technical characteristics, standards, and frequency bands of operation for radio-frequency identification (RFID) and potential harmonization opportunities", Report ITU-R SM.2255-0, 1. Oktober 2012 (2012-10-01), XP055478394, Gefunden im Internet: URL:https://www.itu.int/dms_pub/itu-r/opb/ rep/R-REP-SM.2255-2012-PDF-E.pdf [gefunden am 2018-05-25]

## Beschreibung

Die Erfindung betrifft eine Drehmaschine gemäß dem Oberbegriff des Patentanspruchs 1, mit einem Arbeitsraum über einem Maschinenbett, der zumindest ein austauschbares Maschinenteil und/oder Handwerkzeug auf oder über dem Maschinenbett enthält, sowie ein Verfahren zu deren Betrieb.

Es ist bekannt, berührungslose Identifikationssysteme auf der Basis von elektromagnetischen Wellen, auch RFID Systeme genannt, zur Identifikation von Bearbeitungswerkzeugen einzusetzen, z.B. Fräsköpfen und Bohrern. So wird im "Applikationsbericht RFID-2011-01" mit dem Titel "RFID in der spanabhebenden Bearbeitung" der Firma Pepperl+Fuchs GmbH eine solches System beschrieben. Vor einer Bearbeitung soll sichergestellt werden, dass ein Werkstück mit dem richtigen Werkzeug und Arbeitsprogramm bearbeitet wird. Dies geschieht mit je einem Transponder im Werkstückträger, der fest mit dem Werkstück "verheiratet" ist und einem Transponder im Werkzeugkopf, der dem eingespannten Werkzeug fest zugeordnet ist. Diese Anordnung weist den Nachteil auf, dass sich z.B. ein Werkzeugkopftransponder und ein dazugehöriger Lesekopf in einer unmittelbaren räumlichen Nähe zueinander befinden und beide möglichst direkt aufeinander ausgerichtet sein müssen. Diese genaue Ausrichtung muss dauerhaft sichergestellt sein und nachjustiert werden. Zudem müssen u.U. viele Leseköpfe in der Art einer "eins zu eins" Zuordnung zu jeweils einer bestimmten Werkzugaufnahmen in einer Anlage verteilt sein. Im Artikel mit dem Titel "RFID-Werkzeugidentifikation - Eine etablierte Technologie mit Mehrwert", erschienen im Magazin "SENSOR MAGAZIN" in der Ausgabe 2/Mai 2011 ist ein Werkzeugidentifikationssystem mit RFID Technologie beschrieben. Auch dieses weist den Nachteil auf, dass auf Grund des induktiven Datenaustausches zwischen Lesekopf und einer Auswerteinheit eine sichere Datenübertragung nur bei Schreib-/Leseabständen von bis zu 3,5 Millimetern gewährleistet ist. Zudem sind zwischen RFID Transponder und Sende-/Empfangseinheit nur geringe Datenübertragungsraten erzielbar.

Im "Report ITU-R SM.2255-0 (10/2012)" mit dem Titel "Technical characteristics, standards, and frequency bands of operation for radio-frequency identification (RFID) and potential harmonization opportunities" der "International Telecommunication Union" sind eine Vielzahl von technischen Standards, Frequenzbändern und deren Zulassungen in einzelnen Ländern beschrieben. So wird zwar in der dortigen Tabelle 1 z.B. auf ein Frequenzband von 890-960 MHz verwiesen, das bei "Inventory management, supply chain and retail" mit "long-range with a limited computation power" Verwendung soll. Dennoch erfolgt im Stand der Technik bei Werkzeugidentifikationssystemen mit RFID Technologie die datentechnische Kommunikation zwischen Sende-/Empfangseinheit und Transponder im niederfrequenten Spektrum bei induktiver Kopplung mit einer Frequenz von ca. 125 kHz bis 455 kHz.

Aus der JP 04331036 A ist ein System zur Werkzeugidentifikation bekannt. Dieses weist ein Werkzeugmagazin mit revolverartig angeordneten Behältern auf, in denen sich ein Identifikationswerkzeug befindet. Ein Schreib-Lese-Kopf ist in direkter räumlicher Nähe zum Werkzeugmagazin platziert, so dass Identifikationsdaten des in einem Behälter befindlichen Werkzeug erfasst werden können. Auch dieses System ermöglicht nur eine "eins zu eins" Zuordnung im Nahfeld zwischen dem Schreib-Lese-Kopf und einem einzelnen Behälter.

Aus der JP 01159154 A ist eine Vorrichtung zur Verwaltung von Werkzeugdaten bekannt. Diese werden von einem Schreib-/Lesekopf aus einem Speicher ausgelesen, der am jeweiligen Werkzeug angebracht ist. Die Daten werden von einem Programm für den Antrieb eines Werkzeugmagazins genutzt.

Die EP 3 031 573 A1 beschreibt eine Drehmaschine gemäß dem Oberbegriff des Patentanspruchs 1, mit einer Aufnahme für einen Futterschlüssel und einem induktiven Sensor, der eine Rotation der Hauptspindel unterbindet, sofern dieser den Futterschlüssel nicht in der Aufnahme detektiert. Hierfür ist der Futterschlüssel mit einem RFID-Transponder ausgestattet, der mittels des Sensors an der Aufnahme erfasst werden kann, sofern sich der Futterschlüssel in unmittelbarer Nähe zum Sensor befindet.

RFID Systeme der oben genannten Art sind mit dem Nachteil behaftet, dass die maximal mögliche Sende-/Empfangsdistanz maximal nur wenige Zentimeter beträgt. RFID Transponder und Sende-/Empfangseinheit müssen somit in eine unmittelbare Nähe zueinander gebracht werden, um eine Kommunikation zu ermöglichen. So muss eine Sende-/Empfangseinheit zur Identifikation eines Werkzeugs oder zum Auslesen von Werkzeugdaten unmittelbar an der Werkzeugaufnahme angeordnet sein. Dabei besteht die Gefahr von Kollisionen zwischen Maschinenteilen oder Werkstücken und der Sende-/Empfangseinheit.

Weiterhin besteht die Gefahr der Verschmutzung der Sende-/Empfangseinheit durch Prozessabfälle, z.B. Späne, Schmiermittel oder Verbrennungsdämpfe. Ein weiterer Nachteil in dem oben beschriebenen Stand der Technik ist die geringe Sende-/Empfangsdistanz. Es muss somit in jedem Bereich, in dem eine Werkzeugidentifikation erfolgen soll, eine separate Sende-/Empfangseinheit angeordnet sein. Weiterhin ist ein Datenaustausch zwischen den Komponenten nur bei einer geringen Relativgeschwindigkeit zwischen Transponder und Sende-/Empfangseinheit möglich. So ist es im Stand der Technik z.B. nach einem Spannmittelwechsel und vor Beginn einer Bearbeitung erforderlich, dass eine Referenzbewegung des Spannmittels mit geringer Geschwindigkeit durchgeführt werden muss. Dabei wird der RFID Transponder am Spannmittel langsam an der zugeordneten Sende-/Empfangseinheit vorbeigeführt, um eine Datenübertragung zwischen beiden Komponenten zu ermöglichen.

Aus der DE 21 2010 000 101 U1 ist ein Spannfutter mit hydraulisch bewegbaren Backen bekannt. Diese weisen Sensoren zur Bestimmung der auf ein Werkstück ausgeübten Spannkraft auf, z.B. Kraftmesszellen. Deren Messwerte werden mittels drahtloser Technologie an ein Steuerungssystem übertragen. Darin wird ein Vergleich der gemessenen mit der erforderlichen Einspannkraft vorgenommen und bei Bedarf eine Erhöhung bzw. Erniedrigung des hydraulischen Systemdrucks veranlasst, um die während eines Drehprozesses auf ein Werkstück einwirkende Spannkraft der Backen möglichst konstant zu halten.

In der DE 20 2006 006 921 U1 ist schließlich eine tragbare Antenneneinrichtung mit einem als eine metallische Zone ausgebildeten Reflektor beschrieben.

Der Erfindung liegt die Aufgabe zu Grunde, eine Drehmaschine weiterzubilden und ein Verfahren zu deren Betrieb anzugeben, so dass eine universellere Datenerfassung von RFID Transpondern möglich ist, welche austauschbaren Maschinenteilen und/oder von Bedienpersonal benötigtem Handwerkzeugen zugeordnet und nicht in unmittelbarer Nähe zu einer RFID Sende-/Empfangseinheit angeordnet sind.

Die Aufgabe wird gelöst mit der im Anspruch 1 angegebenen Drehmaschine und dem im Anspruch 9 angegebenen Verfahren. Weitere bevorzugte Ausgestaltungen der Erfindung sind in den jeweiligen Unteransprüchen angegeben.

Bei der erfindungsgemäßen Drehmaschine ist zumindest ein RFID Transponder mit zumindest einem gespeicherten Kennwert einem Maschinenteil und/oder Handwerkzeug zugeordnet. Zudem ist zumindest eine RFID Sende-/Empfangseinheit dezentral über dem Maschinenbett zur Überwachung des Arbeitsraums so angeordnet, dass damit zumindest ein Kennwert mittels elektromagnetischer Kopplung und mit elektromagnetischer Strahlung zumindest des ultrahochfrequenten Funk-Spektrums aus zumindest einem RFID Transponder berührungslos abfragbar ist. Eine Steuereinheit gibt der Drehmaschine abhängig von einem Kennwert zumindest eine Steuergröße vor.

Die erfindungsgemäße Drehmaschine ist somit mit einem RFID System ausgestattet. Dieses weist zumindest eine RFID Sende-/Empfangseinheit auf, die elektronisch mit einer Steuereinheit gekoppelt ist. Die RFID Sende-/Empfangseinheit kommuniziert datentechnisch und berührungslos mit zumindest einem im Arbeitsraum befindlichen RFID Transponder. In der Regel sind im Arbeitsraum eine Vielzahl von RFID Transpondern jeweils einem austauschbaren Maschinenteil und/oder einem Handwerkzeug eindeutig zugeordnet, d.h. insbesondere fest damit verbunden. Dabei wird von der RFID Sende-/ Empfangseinheit zumindest ein auf dem Transponder gespeicherter Kennwert abgefragt. Der empfangene Kennwert wird an die Steuereinheit der Drehmaschinen übermittelt. Eine solche RFID Sende-/Empfangseinheit wird häufig auch kurz als Leseeinheit bzw. als eine Schreib-/Leseeinheit bezeichnet. Eine solche führt auch datentechnische Schreibvorgänge in dem Sinne aus, dass durch Abstrahlung einer entsprechenden Sendeenergie ein bestimmter Transponder adressiert und aktiviert werden kann, d.h. "geweckt" wird. Das vom Transponder dann mit Hilfe der empfangenen Energie zurückgesendete Datensignal, in dem der zumindest eine gewünschte Kennwert eincodiert ist, kann dann von der RFID Sende-/Empfangseinheit wieder empfangen werden.

Bei der Erfindung wird unter dem Begriff "austauschbares Maschinenteil" jede Komponente verstanden, die an der Drehmaschine durch Rüstvorgänge befestigt und gegebenenfalls ausgetauscht werden kann. Dies sind bei einer Drehmaschine z.B. ein Spannmittel, Werkzeugschlitten, Werkzeughalter und daran fixierte Werkzeuge, ein Reitstock, eine Lünette, eine der Bewegung des Werkzeugschlittens nachgeführte verschiebbare Fronthaube, Schutzeinrichtungen, Maschinenabdeckungen und vieles mehr. Weiterhin wird bei der Erfindung unter dem Begriff "Werkzeug" jede zur spanabhebenden Bearbeitung geeignete Komponente verstanden, ggf. mit einem dazugehörigen Werkzeughalter. Dies sind bei einer Drehmaschine z.B. Dreh-, Fräs- und Bohrwerkzeuge, z.B. Drehmeißel, Schneidplattenhalter mit Wendeschneidplatten und vieles mehr. Schließlich wird bei der Erfindung unter dem Begriff "Handwerkzeug" jedes handführbare Werkzeug verstanden, dass von einer Person zur Durchführung von Montage-, Reparatur- oder Rüstvorgängen im Inneren des Arbeitsraumes der Drehmaschine benötigt wird. Diese können bei einer Drehmaschine z.B. rein mechanisch anzuwenden sein oder auch zusätzlich mit elektrischer, pneumatischer oder hydraulischer Hilfsenergie angetrieben sein.

Vorteilhaft handelt es sich bei einem abgefragten Kennwert um einen Identifikationswert oder einem Prozessparameter, der einem austauschbaren Maschinenteil und/oder Handwerkzeug eindeutig zugeordnet ist. Diese Größen ermöglichen es der Steuerung z.B. den Typ der zugeordneten Komponenten zu erkennen bzw. für deren ordnungsgemäßen Betrieb bei der Drehmaschine erforderliche technologische Prozessparameter zu aktivieren.

Bei der erfindungsgemäßen Drehmaschine sowie dem erfindungsgemäßen Verfahren zum Betrieb einer derartigen Drehmaschine wird von einer RFID Sende- und Empfangseinheit ein gespeicherter Kennwert mittels einer elektromagnetischen Kopplung und mit elektromagnetischer Strahlung zumindest des ultrahochfrequenten Funk-Spektrums aus zumindest einem RFID Transponder im Arbeitsraum berührungslos abgefragt.

Gemäß der Erfindung wird ein RFID Transponder im Arbeitsraum der Drehmaschine durch eine RFID Sende-/Empfangseinheit mit elektromagnetischer Strahlung zumindest des ultrahochfrequenten Funk-Spektrums abgefragt. Dieses umfasst insbesondere einen Frequenzbereich von 433 MHz bis 5800 MHz. Die Abfrage mit Frequenzen, die in dieser Bandbreite liegen, bietet eine Reihe von Vorteilen. So sind Kennwerte eines RFID Transponders auf Grund der dabei physikalisch auftretenden "elektromagnetischen Kopplung" zwischen Transponder und RFID Sende-/Empfangseinheit besonders vorteilhaft über weitreichende Distanzen von bis zu 10 m abfragbar. Der Überwachungsbereich umfasst somit das gesamte Volumen des Arbeitsraums der Drehmaschine.

Es wird somit vorteilhaft vermieden, dass eine RFID Sende-/Empfangseinheit in einer unmittelbaren räumlichen Nähe zu einem RFID Transponder angeordnet sein muss. Die Erfindung macht eine Echtzeit-Überwachung des gesamten Arbeitsraums einer Drehmaschine und somit eine schnelle, quasi gleichzeitige Kommunikation mit mehreren Transpondern möglich.

In der Bundesrepublik Deutschland ist eine Behörde mit Namen "Bundesnetzagentur" für die Zuteilung von Frequenzbereichen für die Nutzung durch die Allgemeinheit oder einen nach allgemeinen Merkmalen bestimmten oder bestimmbaren Personenkreis zuständig. Diese Zuteilungen werden zur Harmonisierung der von der Europäischen Kommission vorgesehenen Frequenznutzungen vorgenommen. So sind z.B. in einer mit "Vfg. 6/2010" bzw. "Vfg. 6/2010, geändert durch Vfg. 4/2018" bezeichneten Richtlinie dieser Behörde mit dem Titel "Allgemeinzuteilung von Frequenzen in den Frequenzbereichen 865-868 MHz und 2446-2454 MHz für Funkanwendungen für Identifizierungszwecke; ("Radio Frequency Identification Applications", RFID)" Frequenzbereiche und Frequenznutzungsparameter aufgelistet.

Dementsprechend können bei einem Einsatz der Erfindung in der Europäischen Union bevorzugt Frequenzen eingesetzt werden, die in einem Bereich von 865 MHz bis 868 MHz bzw. 2446 MHz bis 2454 MHz liegen. Bei einem Einsatz der Erfindung in den Vereinigten Staaten von Amerika können bevorzugt Frequenzen eingesetzt werden, die in einem Bereich von 900 MHz bis 925 MHz liegen. Darüber hinaus ist die Erfindung grundsätzlich in allen Frequenzbereichen nutzbar, in denen eine berührungslose Datenübertragung zwischen RFID Transpondern und einer RFID Sende-/Empfangseinheit, kurz RFID Lesegerät, durch eine elektromagnetische, d.h. nicht induktive, Kopplung erfolgt. Es sind somit auch Frequenzen bis zu einer unteren Grenze von etwa 433 MHz sowie oberen Grenzen von etwa 2545 MHz und bis zu 5800 MHz technisch möglich, soweit diese durch den Gesetzgeber im jeweiligen Nutzungsgebiet zugelassen sind.

Die Erfindung macht es möglich, dass Kennwerte eines RFID Transponders bereits im Moment der Einbringung eines diesem zugeordneten austauschbaren Maschinenteils und eines Handwerkzeugs in den Arbeitsraum der Drehmaschine automatisch abfragbar sind. Es kann somit bereits vor einer Inbetriebsetzung der Drehmaschine von der Steuerung durch Auswertung der Kennwerte festgestellt werden, ob die Drehmaschine nur mit zulässigen Maschinenteilen vollständig ausgestattet ist oder ob sich noch Handwerkzeuge im Arbeitsraum befinden, die von Bedienpersonal in unzulässiger Weise zurückgelassen wurden. Ein weiterer Vorteil der Erfindung ist es, dass die Abfrage von Kennwerten von mehreren RFID Transpondern bereits mit einer einzigen RFID Sende-/ Empfangseinheit möglich ist. Diese kann z.B. an einem Rand des Arbeitsraums so über dem gesamten Maschinenbett dezentral angeordnet sein, dass keine Kollisionen mit Werkzeugen oder Werkstücken und keine Verschmutzungen durch Prozessrückstände auftreten. Vorteilhaft können im Arbeitsraum von Drehmaschinen, die ein Maschinenbett mit mehreren Metern Länge aufweisen, auch mehrere RFID Sende-/ Empfangseinheiten dezentral entlang des Maschinenbetts angeordnet sein und die Kennwerte von RFID Transpondern aus einzelnen Abschnitten des Arbeitsraums abfragen.

Weitere Vorteile der Erfindung sind die Abfrage von Kennwerten mit einer hohen Sende-/Empfangsrate und die simultane Abfragbarkeit von Kennwerten mehrerer RFID Transponder im Arbeitsraum der Drehmaschine. So ist vorteilhaft in Echtzeit eine automatische Überwachung der Kennwerte aller RFID Transponder im Arbeitsraum durch nur eine dezentrale RFID Sende-/Empfangseinheit über dem Maschinenbett der Drehmaschine möglich. Ein fehlerhaftes Einbringen bzw. Entfernen nicht zugelassener Maschinenteile oder Handwerkzeuge in den bzw. aus dem Arbeitsraum ist bereits vor einer Inbetriebnahme der Drehmaschine feststellbar. Weiterhin sind Kennwerte auch bei hoher Relativgeschwindigkeit zwischen RFID Transpondern und RFID Sende-/Empfangseinheit abfragbar. Diese sind im normalen Betrieb der Drehmaschine während eines Arbeitsprozesses auslesbar, z.B. einer Werkzeugrotation oder eines Werkzugschlittenvorschubs im Eilgang.

Auf den RFID Transpondern ist vorteilhaft als Kennwert jeweils zumindest ein Identifikationswert gespeichert. Deren Abfrage und Auswertung in der Steuereinheit ermöglicht eine Feststellung der Zulassung oder Nichtzulassung eines jeden im Arbeitsraum befindlichen Maschinenteils oder Handwerkzeugs, bzw. das Fehlen eines betriebsnotwendigen Teils. Bei Bedarf können die Identifikationswerte in der Steuerung hinterlegten Prozessparametern zugeordnet werden. Diese können der Drehmaschine von der Steuereinheit als Steuergrößen automatisch vorgegeben werden, sodass eine manuelle Eingabe der Werte durch einen Bediener entfällt. Eine manuelle Eingabe fehlerhafter, nicht mit einem Maschinenteil korrespondierender Prozessparameter und Schäden an Werkstück und Drehmaschine wird vermieden.

Die Erfindung ermöglicht vorteilhaft die automatische Erzeugung von Schaltbefehlen. So kann die Steuereinheit z.B. nach Abfrage des Identifikationswerts eines Handwerkzeugs im Arbeitsraum der Drehmaschine einen Stop-Befehl als Steuergröße vorgeben. Weiterhin kann z.B. der Spindelantrieb durch die Steuerung erst dann freigegeben werden, wenn der Identifikationswert einer notwendigen Sicherheitseinrichtung im Arbeitsraum abfragbar ist, z.B. eines Drehfutterschutzes. Die erfindungsgemäße Sicherheitsüberwachung des gesamten Arbeitsraums reduziert Gefahren für den Bearbeitungsprozess und Bediener.

Abhängig von der Bauart der eingesetzten RFID Transponder kann darin als Kennwert auch direkt zumindest ein Prozessparameter insbesondere für ein austauschbares Maschinenteil gespeichert sein. Dieser kann zeitsparend zur Ableitung von Steuergrößen für die Drehmaschine auch bei Maschinenteilen ohne eigenen Identifikationswert genutzt werden.

Die Erfindung und weitere vorteilhafte Ausführungen derselben werden anhand der kurz angeführten Figuren nachfolgend näher erläutert. Dabei zeigt
- Fig. 1: eine erste beispielhafte, gemäß der Erfindung ausgeführte Drehmaschine D mit einem kurzen Maschinenbett in einer schematischen Frontansicht, und
- Fig. 2: eine zweite beispielhafte, gemäß der Erfindung ausgeführte Drehmaschine D mit einem langen Maschinenbett in einer schematischen Frontansicht.

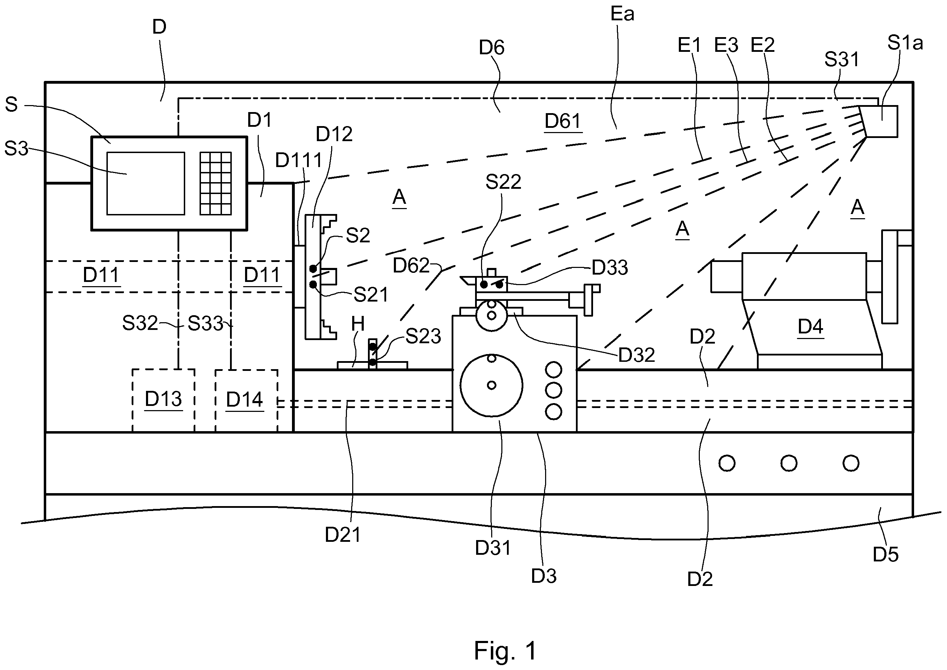

Im Beispiel der Fig. 1 ist die erfindungsgemäße Drehmaschine D als konventionelle Leit- und Zugspindeldrehmaschine ausgeführt. Diese weist im Arbeitsraum A z.B. einen Spindelstock D1 sowie einen Werkzeugschlitten D3 und Reitstock D4 auf, welche auf einem Maschinenbett D2 gleitend gelagert sind. Der Arbeitsraum A der Drehmaschine D ist insbesondere durch das Maschinenbett D2 nach unten begrenzt. Im Beispiel der Fig. 1 ist der Arbeitsraum A vorteilhaft durch eine zusätzliche Rückwand D6 an der einem Bediener abgewandten Rückseite der Drehmaschine D begrenzt. Zur Aufstellung der Drehmaschine D dient ein in Fig. 1 nur abschnittsweise dargestelltes Maschinengestell D5.

Der Spindelstock D1 weist eine Hauptspindel D11 mit einem Antrieb D13 auf. Am Spindelkopf D111 der Hauptspindel D11 ist eine Planscheibe mit Spannbacken als Spannmittel D12 befestigt. Im Spindelstock D1 ist ein separater Antrieb D14 für eine Vorschubspindel D21 angeordnet, womit der Werkzeugschlitten D3 entlang des Maschinenbetts D2 verfahrbar ist. Bei anderen Ausführungen der erfindungsgemäßen Drehmaschine D kann die Vorschubspindel D21 auch über ein Getriebe mit dem Antrieb D13 der Hauptspindel D11 gekoppelt sein. Der Werkzeugschlitten D3 weist einen Bettschlitten D31 auf, worauf quer zum Maschinenbett D2 ein Planschlitten D32 angeordnet ist. Dieser weist eine Aufnahme für einen Werkzeughalter D33 zur Bearbeitung eines Werkstücks auf. Der Werkzeughalter D33 kann eine Komponente eines Schnellwechselsystems sein und einen Drehstahl als Werkzeug tragen.

Die Drehmaschine D weist eine Steuereinheit S mit einer Maschinensteuerung S3 auf, die am Spindelstock D1 an der einem Bediener zugewandten Frontseite angeordnet ist. Die Maschinensteuerung S3 ist über eine zweite Datenverbindung S32 mit dem Antrieb D13 der Hauptspindel D11 und eine dritte Datenverbindung S33 mit dem Antrieb D14 der Vorschubspindel D21 verbunden.

Gemäß der Erfindung weist die Drehmaschine D im Arbeitsraum A zumindest ein austauschbares Maschinenteil und/oder ein Handwerkzeug auf. Im Beispiel der Fig. 1 sind im Arbeitsraum A als ein austauschbares Maschinenteil z.B. das Spannmittel D12 und der Werkzeughalter D33, sowie als ein Handwerkzeug H ein Schraubenschlüssel für Rüstarbeiten zu sehen. An einem austauschbaren Maschinenteil und/oder Handwerkzeug ist erfindungsgemäß jeweils ein RFID Transponder S2 bevorzugt fest angebracht. So ist dem Spannmittel D12 ein erster RFID Transponder S21 zugeordnet, der z.B. in der Planscheibe fest eingelassen ist. Dem Werkzeughalter D33 ist ein zweiter RFID Transponder S22 zugeordnet, der darin fest eingelassen ist. Dem Handwerkzeug H ist ein dritter RFID Transponder S23 zugeordnet, der z.B. durch einen Kleber am Schraubenschlüssel gehalten ist. Die RFID Transponder S21, S22, S23 sind bevorzugt passiv ausgeführt. Darin ist jeweils zumindest ein Kennwert gespeichert.

Erfindungsgemäß ist im Arbeitsraum A zumindest eine RFID Sende-/Empfangseinheit S1a über dem Maschinenbett D2 angeordnet und mittels einer ersten Datenverbindung S31 mit der Maschinensteuerung S3 der Steuereinheit S verbunden. Diese fragt mittels elektromagnetischer Kopplung zumindest in einem ultrahochfrequenten Spektrum die Kennwerte der RFID Transponder S21, S22, S23 ab. Wie es oben im Detail bereits erläutert wurde ist damit insbesondere ein Frequenzbereich von 433 MHz bis 5800 MHz bezeichnet.

Gemäß der Erfindung gibt die Steuereinheit S der Drehmaschine D Steuergrö-ßen abhängig von dem zumindest einen abgefragten Kennwert vor. Vorteilhaft fragt eine RFID Sende-/Empfangseinheit S1a als Kennwert einen Identifikationswert des austauschbaren Maschinenteils D12, D33 und Handwerkzeugs H ab. Die Maschinensteuerung S3 der Steuereinheit S ruft dann z.B. einen dem Identifikationswert zugeordneten Prozessparameter auf und gibt diesen der Drehmaschine D automatisch vor. So kann z.B. der abgefragte Identifikationswert eines Werkzeughalters einem hinterlegten Wert einer Schnittgeschwindigkeit des Werkzeugs zugeordnet sein. Dieser wird als Prozessparameter der Drehmaschine D von der Maschinensteuerung S3 vorgegeben. Weiterhin kann z.B. bei Erkennung des Identifikationswerts eines Handwerkzeugs H als Prozessparameter ein Stop-Befehl vorgegeben werden. Damit wird ein Anlaufen eines Arbeitsprozesses unterbunden, bis das Handwerkzeug H aus dem Arbeitsraum A entfernt ist und der Identifikationswert des Handwerkzeugs H nicht mehr detektierbar ist. Weiterhin kann z.B. ein Anlaufen eines Arbeitsprozesses durch die Maschinensteuerung D3 unterbunden werden, bis der Identifikationswert eines Drehfutterschutzes im Arbeitsraum abfragbar ist. Mit der Erfindung ist eine Überwachung des gesamten Arbeitsraums auf Fremdkörper und das Ausgeben entsprechender Steuerbefehle zur Vermeidung von Unfällen, unbrauchbaren Produkten und Beschädigungen der Drehmaschine möglich.

Gemäß einer weiteren vorteilhaften Ausführung liest eine RFID Sende-/Empfangseinheit S1a als Kennwert einen Prozessparameter eines austauschbaren Maschinenteils D12, D33 und/oder Handwerkzeugs H. Diese sind unmittelbar auf dem RFID Transponder insbesondere eines austauschbaren Maschinenteils gespeichert. Es kann somit z.B. als Kennwert des Spannmittels D12 als ein austauschbares Maschinenteil eine maximal zulässige Spindeldrehzahl abgefragt werden, die der Drehmaschine als restriktiver Prozessparameter vorgegeben wird. Weiterhin können z.B. als Kennwert des Werkzeughalters D33 als ein austauschbares Maschinenteil ein maximal zulässiger Vorschubwert oder eine maximal zulässige Schnittgeschwindigkeit abgefragt werden. Weiterhin kann z.B. als Kennwert einer Lünette als ein austauschbares Maschinenteil ein zulässiges Spannkraftintervall abgefragt werden, sodass weder ein Lösen des Werkstücks aus der Lünette aufgrund zu geringer Spannkraft noch eine Beschädigung des Werkstücks durch Pressung in der Lünette aufgrund einer zu hohen Spannkraft auftritt.

Im Beispiel der Fig. 1 ist die RFID Sende-/Empfangseinheit S1a im Arbeitsraum A über dem Maschinenbett D2 im Bereich des Reitstocks D4 gehalten. Besonders vorteilhaft ist die RFID Sende-/Empfangseinheit S1a in einem oberen Eck an der Innenfläche D61 der Rückwand D6 gehalten. Diese erfasst von schräg oben einen Erfassungsbereich Ea, der den Arbeitsraum A mit Spindelstock D1, Werkzeugschlitten D3 und Reitstock D4 vollständig überdeckt. Alle RFID Transponder im Arbeitsraum A sind somit von der dezentral angeordneten RFID Sende-/Empfangseinheit S1a berührungslos abfragbar. So wird z.B. über eine erste direkte Erfassungsstrecke E1 der RFID Transponder S21 an der Planscheibe S21 und über eine zweite direkte Erfassungsstrecke E2 der RFID Transponder S22 am Werkzeughalter D33 abgefragt.

Vorteilhaft können um die RFID Sende-/Empfangseinheit bereichsweise elektromagnetische Blenden angeordnet sein, z.B. in Form von Blechstücken oder Gittern. So wird eine Streuung der Sende-/Empfangsleistung außerhalb des Arbeitsraums reduziert und diese auf den Arbeitsraum der Drehmaschine fokussiert. Damit wird die Gefahr einer unerwünschten Aktivierung von nicht im Arbeitstraum A befindlichen RFID Transpondern reduziert.

Im Beispiel der Fig. 1 weist die erfindungsgemäße Drehmaschine D vorteilhaft eine zusätzliche Rückwand D6 auf. Diese ist bevorzugt metallisch und ermöglicht elektromagnetische Reflexionen zwischen der RFID Sende-/Empfangseinheit S1a und den RFID Transpondern S21, S22, S23. Dabei wird die vorteilhafte Wirkung erzielt, dass auch Kennwerte von RFID Transpondern abfragbar sind, deren Position im Arbeitsraum keine direkte Erfassungsstrecke zur RFID Sende-/Empfangseinheit ermöglicht. So ist im Beispiel der Fig. 1 der RFID Transponder S23 des Handwerkzeugs H für direkte elektromagnetische Strahlung zwar durch den Werkzeugschlitten D33 abgeschattet. Die Sende- und Empfangsspektren der RFID Sende-/Empfangseinheit S1a und des RFID Transponders S23 werden aber an der Innenfläche D61 der Rückwand D6 im Reflexionsbereich D62 so umgelenkt, dass der Kennwert des RFID Transponders S23 dennoch über eine indirekte Erfassungsstrecke E3 von der RFID Sende-/Empfangseinheit S1a abfragbar ist.

Bei einer weiteren, in Fig. 1 bereits dargestellten vorteilhaften Ausführung der erfindungsgemäßen Drehmaschine D sind einem austauschbaren Maschinenteil D12, D33 und/oder Handwerkzeug H jeweils zwei RFID Transponder zugeordnet. So ist an den RFID Transpondern S21, S22, S23 jeweils ein zweiter, identisch codierter RFID Transponder angebracht. Die Kennwerte der RFID Transponder können somit paarweise unabhängig voneinander von der RFID Sende-/Empfangseinheit abgefragt werden. Es wird somit vorteilhaft die Wahrscheinlichkeit erhöht, dass zumindest Kennwerte eines der RFID Transponder abfragbar ist und die Erkennung von austauschbaren Maschinenteilen und/oder Handwerkzeugen im Arbeitsraum sichergestellt ist.

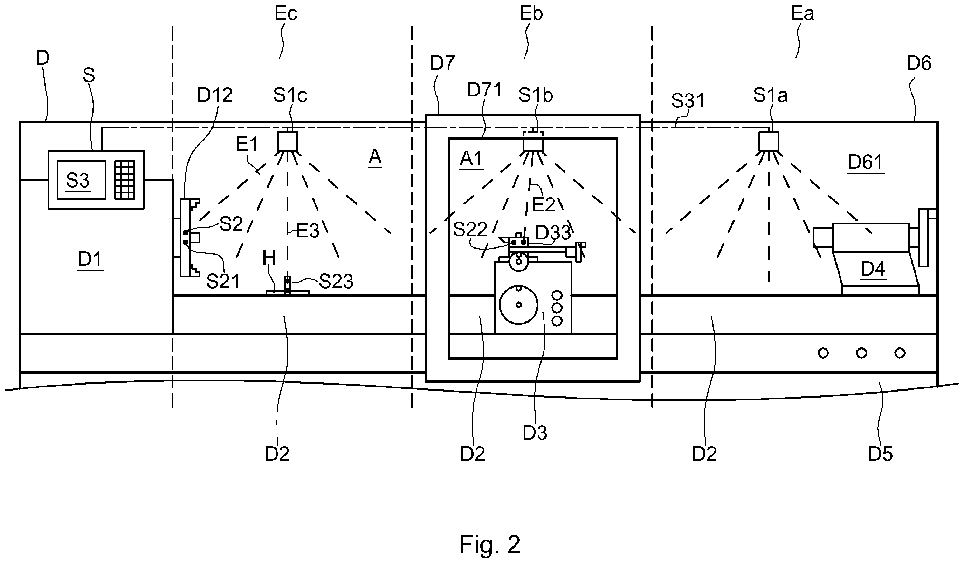

Im Beispiel der Fig. 2 ist eine weitere vorteilhafte Ausführung einer erfindungsgemäßen Drehmaschine D dargestellt. Diese ist mit der Maschine von Fig. 1 vergleichbar, jedoch mit einem mehrere Meter langen Maschinenbett D2 ausgestattet und somit zur Bearbeitung langer Werkstücke geeignet.

So weist die Drehmaschine D in Fig. 2 eine erste RFID Sende-/Empfangseinheit S1a auf, die wiederum über dem Maschinenbett D2 im Bereich des Reitstocks D4 an der Rückwand D6 angeordnet ist. Deren erster Erfassungsbereich Ea ist im Bereich des Reitstocks D4 nach unten auf das Maschinenbett D2 gerichtet. Gemäß einer weiteren vorteilhaften Ausführung, die ebenfalls in Fig. 2 dargestellt ist, ist eine weitere RFID Sende-/Empfangseinheit S1b im Arbeitsraum A über dem Werkzeugschlitten D3 der Drehmaschine D gehalten. Diese überdeckt einen zweiten Erfassungsbereich Eb, der im Bereich des Werkzeugschlittens D3 nach unten auf das Maschinenbett D2 gerichtet ist. Der zweite Erfassungsbereich Eb entspricht annähernd dem Arbeitsbereich A1 des Arbeitsraums A, in dem die Bearbeitung eines Werkstücks erfolgt. In einer weiteren Ausführung der Erfindung kann die zweite RFID Sende-/Empfangseinheit S1b u.U. auch direkt am Werkzeugschlitten D3 angeordnet sein.

Im Beispiel der Fig. 2 weist die Drehmaschine D an der Frontseite eine zusätzliche Fronthaube D7 auf. Diese ist entlang des Maschinenbetts D2 im Bereich des Werkzeugschlittens D3 verschiebbar. Die Fronthaube D7 weist ein Sichtfenster D71 auf, das einem Bediener eine Beobachtung des Werkzeugeingriffs ermöglicht. Das Sichtfenster D71 kann elektromagnetisch reflektierend ausgeführt sein, z.B. eine metallisch bedampfte Oberfläche aufweisen, um den Erfassungsbereich Eb der zweite RFID Sende-/Empfangseinheit S1b auf den Arbeitsraum A bzw. den Arbeitsbereich A1 zu fokussieren. Die Fronthaube D7 ist vorteilhaft der Bewegung des Werkzeugschlittens D3 nachgeführt, z.B. mittels einer mechanischen Kopplung zwischen Werkzeugschlitten und Fronthaube. Bei Bedarf kann die zweite RFID Sende-/Empfangseinheit S1b im Arbeitsraum A an der Fronthaube D7 über dem Maschinenbett D2 gehalten sein gehalten. Im Beispiel der Fig. 2 ist eine weitere RFID Sende-/Empfangseinheit S1c im Arbeitsraum A über dem Spindelkopf D111 gehalten. Diese überdeckt einen dritten Erfassungsbereich Ec, der im Bereich des Spannmittels D12 nach unten auf das Maschinenbett D2 gerichtet ist.

Die Drehmaschine D in der Ausführung von Fig. 2 weist somit eine erste, zweite und dritte RFID Sende-/Empfangseinheit S1a, S1b, S1c mit jeweils einem ersten, zweiten und dritten Erfassungsbereich Ea, Eb, Ec auf. Es sind somit besonders vorteilhaft Kennwerte von RFID Transpondern im Arbeitsraum A von jeweils einer RFID Sende-/Empfangseinheit pro Erfassungsbereich abschnittsweise abfragbar. Vorliegend ist im ersten Erfassungsbereich Ea am Reitstock D4 kein Kennwert eines RFID Transponders abfragbar. Im zweiten Erfassungsbereich Eb am Werkzeugschlitten D3 ist von der zweiten RFID Sende-/Empfangseinheit S1b über die zweite Erfassungsstrecke E2 der Kennwert des zweiten RFID Transponders S22 am Werkzeughalter D33 abfragbar. Im dritten Erfassungsbereich Eb am Spannmittel D12 sind von der dritten RFID Sende-/Empfangseinheit S1c über die erste Erfassungsstrecke E1 der Kennwert des ersten RFID Transponders S21 am Werkzeughalter D33 und über die dritte Erfassungsstrecke E3 der Kennwert des dritten RFID Transponders S23 am Handwerkzeug H abfragbar. Die RFID Sende-/Empfangseinheiten S1a, S1b, S1c sind jeweils über eine erste Datenverbindung S31 mit der Maschinensteuerung S3 verbunden. Diese verarbeitet die ausgelesenen Kennwerte auf die bereits beschriebene Weise und gibt der Drehmaschine D abhängig davon als Steuergrößen insbesondere angepasste Prozessparameter vor.

### Bezugszeichenliste

- D: Drehmaschine
- A: Arbeitsraum
- A1: Arbeitsbereich über Werkzeugschlitten
- D1: Spindelstock
- D11: Hauptspindel
- D111: Spindelkopf
- D12: Spannmittel, beispielhaft Planscheibe
- D13: Antrieb für Hauptspindel
- D14: Antrieb für Zugspindel
- D2: Maschinenbett
- D21: Vorschubspindel, z.B. eine Zugspindel
- D3: Werkzeugschlitten
- D31: Bettschlitten
- D32: Planschlitten
- D33: Werkzeughalter mit Werkzeug
- D4: Reitstock
- D5: Maschinengestell
- D6: Rückwand
- D61: Innenfläche
- D62: Reflexionsbereich
- D7: Fronthaube
- D71: Sichtfenster
- H: Handwerkzeug
- S: Steuereinheit
- S1a: erste RFID Sende-/Empfangseinheit über dem Bereich der Werkstückgegenhaltung [des Reitstocks] über dem Maschinenbett
- S1b: zweite RFID Sende-/Empfangseinheit über dem Bereich der Werkstückbearbeitung [des Werkzeugschlittens] über dem Maschinenbett
- S1c: dritte RFID Sende-/Empfangseinheit über dem Bereich der Werkstückaufnahme [des Spindelstocks] über dem Maschinenbett
- Ea, Eb, Ec: erster, zweiter, dritter Erfassungsbereich
- E1: erste Erfassungsstrecke, z.B. des Spannmittels
- E2: zweite Erfassungstrecke, z.B. des Werkzeughalters
- E3: dritte Erfassungsstrecke, z.B. eines Handwerkzeugs
- S2: RFID Transponder, insbesondere passiv und paarweise
- S21: erster RFID Transponder, z.B. an der Werkzeugaufnahme
- S22: zweiter RFID Transponder, z.B. am Werkzeughalter
- S23: dritter RFID Transponder, z.B. an einem Handwerkzeug
- S3: Maschinensteuerung
- S31: erste Datenverbindung zwischen Maschinensteuerung und einer RFID Sende-/Empfangseinheit
- S32: zweite Datenverbindung zwischen Maschinensteuerung und Antrieb für Hauptspindel
- S33: dritte Datenverbindung zwischen Maschinensteuerung und Antrieb für Zugspindel

## Patentansprüche

1. Drehmaschine (D), mit
- einem Arbeitsraum (A) über einem Maschinenbett (D2), der zumindest ein austauschbares Maschinenteil (D12, D33) und/oder Handwerkzeug (H) auf oder über dem Maschinenbett (D2) enthält, und
- zumindest einem RFID Transponder (S21, S22, S23) mit zumindest einem gespeicherten Kennwert, der einem Maschinenteil (D12, D33) und/oder Handwerkzeug (H) zugeordnet ist,
**gekennzeichnet durch**
- zumindest eine RFID Sende-/Empfangseinheit (S1a, S1b, S1c), die dezentral über dem Maschinenbett (D2) zur Überwachung des Arbeitsraums (A) so angeordnet ist, dass damit zumindest ein Kennwert mittels elektromagnetischer Kopplung und mit elektromagnetischer Strahlung zumindest des ultrahochfrequenten Funk-Spektrums aus zumindest einem RFID Transponder (S21, S22, S23) berührungslos abfragbar ist, und
- eine Steuereinheit (S), die der Drehmaschine (D) abhängig von dem zumindest einen Kennwert zumindest eine Steuergröße vorgibt.

2. Drehmaschine nach Anspruch 1, wobei
eine RFID Sende-/Empfangseinheit (S1a) im Arbeitsraum (A) über dem Reitstock (D4) gehalten ist.

3. Drehmaschine nach Anspruch 1 oder 2, wobei
eine RFID Sende-/Empfangseinheit (S1b) im Arbeitsraum (A) über dem Werkzeugschlitten (D3) der Drehmaschine (D) gehalten ist.

4. Drehmaschine nach einem der Ansprüche 1, 2 oder 3, wobei
eine RFID Sende-/Empfangseinheit (S1c) im Arbeitsraum (A) über dem Spindelkopf (D111) gehalten ist.

5. Drehmaschine nach einem der vorangegangenen Ansprüche, wobei
eine RFID Sende-/Empfangseinheit (S1b) im Arbeitsraum (A) an einer Fronthaube (D7) der Drehmaschine (D) gehalten ist.

6. Drehmaschine nach einem der vorangegangenen Ansprüche, wobei der Arbeitsraum (A)
eine Rückwand (D6) für elektromagnetische Reflexionen zwischen einer RFID Sende-/Empfangseinheit (S1a, S1b, S1c) und einem RFID Transponder (S21, S22, S23) aufweist.

7. Drehmaschine nach einem der vorangegangenen Ansprüche, mit einem Spannmittel (D12) als austauschbares Maschinenteil.

8. Drehmaschine nach einem der vorangegangenen Ansprüche, mit einem Werkzeughalter (D33) als austauschbares Maschinenteil.

9. Verfahren zum Betrieb einer Drehmaschine (D) insbesondere nach einem der vorangegangenen Ansprüche,
**dadurch gekennzeichnet, dass**
- zumindest ein gespeicherter Kennwert von einem austauschbaren Maschinenteil (D12, D33) und/oder Handwerkzeug (H) von zumindest einer zur Überwachung im Arbeitsraum (A) der Drehmaschine angeordneten RFID Sende-/ Empfangseinheit (S1a, S1b, S1c) mittels elektromagnetischer Kopplung und mit elektromagnetischer Strahlung zumindest des ultrahochfrequenten Funk-Spektrums berührungslos abgefragt wird, und
- der Drehmaschine (D) abhängig von dem zumindest einen Kennwert zumindest eine Steuergröße vorgegeben wird.

10. Verfahren nach Anspruch 9, wobei als ein Kennwert
ein Identifikationswert eines austauschbaren Maschinenteils (D12, D33) und/oder Handwerkzeugs (H) abgefragt wird.

11. Verfahren nach Anspruch 9 oder 10, wobei als ein Kennwert
ein Prozessparameter eines austauschbaren Maschinenteils (D12, D33) und/oder Handwerkzeugs (H) abgefragt wird.

12. Verfahren nach Anspruch 9, 10 oder 11, wobei ein Kennwert mit
einer Frequenz im Bereich von 433 MHz bis 5800 MHz abgefragt wird.

13. Verfahren nach Anspruch 12, wobei ein Kennwert mit
einer Frequenz im Bereich von 865 MHz bis 868 MHz abgefragt wird.

14. Verfahren nach Anspruch 12, wobei ein Kennwert mit
einer Frequenz im Bereich von 900 MHz bis 925 MHz abgefragt wird.

15. Verfahren nach Anspruch 12, wobei ein Kennwert mit
einer Frequenz im Bereich von 2446 MHz bis 2454 MHz abgefragt wird.

## Claims

1. Lathe (D), with
- a working space (A) above a machine bed (D2) containing at least one exchangeable machine part (D12, D33) and/or hand tool (H) on or above the machine bed (D2), and
- at least one RFID transponder (S21, S22, S23) with at least one saved identification value associated to a machine part (D12, D33) and/or hand tool (H),
**characterized by**
- at least one RFID transmitter/receiver unit (S1a, S1b, S1c) which is arranged in a decentralized manner above the machine bed (D2) for monitoring the working space (A) in such a way that at least one characteristic value can be interrogated in a contactless manner by means of electromagnetic coupling and with electromagnetic radiation of at least the ultrahigh-frequency radio spectrum from at least one RFID transponder (S21, S22, S23), and
- a control unit (S) which presets at least one control variable for the lathe (D) depending on the at least one characteristic value.

2. Lathe according to claim 1, wherein
an RFID transmitter/receiver unit (S1a) is held in the working space (A) above the tailstock (D4).

3. Lathe according to claim 1 or 2, wherein
an RFID transmitter/receiver unit (S1b) is held in the working space (A) above the tool slide (D3) of the lathe (D).

4. Lathe according to claim 1, 2 or 3, wherein
an RFID transmitter/receiver unit (51c) is held in the working space (A) above the spindle head (D111).

5. Lathe according to any one of the preceding claims, wherein
an RFID transmitter/receiver unit (S1a) is held in the working space (A) on a front opening hood (D7) of the lathe (D).

6. Lathe according to any one of the preceding claims, wherein the working space (A) comprises
a rear panel (D6) for electromagnetic reflections between an RFID transmitter/receiver unit (S1a, S1b, S1c) and an RFID transponder (S21, S22, S23).

7. Lathe according to any one of the preceding claims, having
a clamping device (D12) as an exchangeable machine part.

8. Lathe according to any one of the preceding claims, having
a tool holder (D33) as an exchangeable machine part.

9. Method for operating a lathe (D), in particular according to one of the preceding claims, **characterized in that**
- at least one saved characteristic value of an exchangeable machine part (D12, D33) and/or hand tool (H) is interrogated in a contactless manner by at least one RFID transmitter/receiver unit (S1a, S1b, S1c) arranged for monitoring in the working space (A) of the lathe by means of electromagnetic coupling and with electromagnetic radiation at least of the ultrahigh-frequency radio spectrum, and
- the lathe (D) is preset with at least one control variable depending on the at least one characteristic value.

10. Method according to claim 9, wherein as a characteristic value
an identification value of an exchangeable machine part (D12, D33) and/or hand tool (H) is interrogated.

11. Method according to claim 9 or 10, wherein as a characteristic value
a process parameter of an exchangeable machine part (D12, D33) and/or hand tool (H) is interrogated.

12. Method according to claim 9, 10 or 11, wherein a characteristic value
is interrogated with a frequency in the range from 433 MHz to 5800 MHz.

13. Method according to claim 12, wherein a characteristic value
is interrogated with a frequency in the range from 865 MHz to 868 MHz.

14. Method according to claim 12, wherein a characteristic value
is interrogated with a frequency in the range from 900 MHz to 925 MHz.

15. Method according to claim 12, wherein a characteristic value
is interrogated with a frequency in the range from 2446 MHz to 2454 MHz.

## Revendications

1. Tour (D), comportant
- un espace de travail (A) au-dessus d'un banc de machine (D2), lequel espace de travail contient au moins une pièce de machine (D12, D33) interchangeable et/ou un outil à main (H) sur ou au-dessus du banc de machine (D2), et
- au moins un transpondeur RFID (S21, S22, S23) comportant au moins une valeur caractéristique mémorisée associée à une pièce de machine (D12, D33) et/ou à un outil à main (H),
**caractérisé par**
- au moins une unité d'émission/de réception RFID (S1a, S1b, S1c) qui est disposée de manière décentralisée au-dessus du banc de machine (D2) pour la surveillance de l'espace de travail (A) de telle sorte qu'ainsi, au moins une valeur caractéristique peut être interrogée sans contact depuis au moins un transpondeur RFID (S21, S22, S23) au moyen d'un couplage électromagnétique et avec un rayonnement électromagnétique au moins du spectre radio ultra haute fréquence, et
- une unité de commande (S) qui fournit au moins une grandeur de commande au tour (D) en fonction de l'au moins une valeur caractéristique.

2. Tour selon la revendication 1, dans lequel
une unité d'émission/de réception RFID (S1a) est maintenue dans l'espace de travail (A) au-dessus de la contre-pointe (D4).

3. Tour selon la revendication 1 ou 2, dans lequel
une unité d'émission/de réception RFID (S1b) est maintenue dans l'espace de travail (A) au-dessus du chariot porte-outil (D3) du tour (D).

4. Tour selon l'une des revendications 1, 2 ou 3, dans lequel
une unité d'émission/de réception RFID (51c) est maintenue dans l'espace de travail (A) au-dessus de la tête de broche (D111).

5. Tour selon l'une des revendications précédentes, dans lequel
une unité d'émission/de réception RFID (S1b) est maintenue dans l'espace de travail (A) sur un capot avant (D7) du tour (D).

6. Tour selon l'une des revendications précédentes, dans lequel l'espace de travail (A)
présente une paroi arrière (D6) pour des réflexions électromagnétiques entre une unité d'émission/de réception RFID (S1a, S1b, S1c) et un transpondeur RFID (S21, S22, S23).

7. Tour selon l'une des revendications précédentes, comportant
un moyen de serrage (D12) en tant que pièce de machine interchangeable.

8. Tour selon l'une des revendications précédentes, comportant
un porte-outil (D33) en tant que pièce de machine interchangeable.

9. Procédé permettant le fonctionnement d'un tour (D), en particulier selon l'une des revendications précédentes, **caractérisé en ce que**
- au moins une valeur caractéristique mémorisée d'une pièce de machine (D12, D33) interchangeable et/ou d'un outil à main (H) est interrogée sans contact par au moins une unité d'émission/de réception RFID (S1a, S1b, S1c) disposée pour la surveillance dans l'espace de travail (A) du tour au moyen d'un couplage électromagnétique et avec un rayonnement électromagnétique au moins du spectre radio ultra haute fréquence, et
- au moins une grandeur de commande est fournie au tour (D) en fonction de l'au moins une valeur caractéristique.

10. Procédé selon la revendication 9, dans lequel
une valeur d'identification d'une pièce de machine (D12, D33) interchangeable et/ou d'un outil à main (H) est interrogée en tant que valeur caractéristique.

11. Procédé selon la revendication 9 ou 10, dans lequel
un paramètre de processus d'une pièce de machine (D12, D33) interchangeable et/ou d'un outil à main (H) est interrogée en tant que valeur caractéristique.

12. Procédé selon la revendication 9, 10 ou 11, dans lequel une valeur caractéristique
est interrogée avec une fréquence dans la plage de 433 MHz à 5800 MHz.

13. Procédé selon la revendication 12, dans lequel une valeur caractéristique
est interrogée avec une fréquence dans la plage de 865 MHz à 868 MHz.

14. Procédé selon la revendication 12, dans lequel une valeur caractéristique
est interrogée avec une fréquence dans la plage de 900 MHz à 925 MHz.

15. Procédé selon la revendication 12, dans lequel une valeur caractéristique
est interrogée avec une fréquence dans la plage de 2446 MHz à 2454 MHz.
